# EUROPÄISCHE PATENTSCHRIFT

(11) **EP 3 451 500 B1**
(45) Veröffentlichungstag und Bekanntmachung des Hinweises auf die Patenterteilung: **29.04.2020**
(21) Anmeldenummer: 18188246.5
(22) Anmeldetag: 09.08.2018
(51) Int. Cl.: H02K 1/27, H02K 15/03

(54) **ROTOR FÜR EINEN BÜRSTENLOSEN GLEICHSTROMMOTOR**
ROTOR FOR A BRUSHLESS DIRECT CURRENT MOTOR
ROTOR POUR UN MOTEUR À COURANT CONTINU SANS BROSSE

(30) Priorität: 28.08.2017 DE 102017215003
(43) Veröffentlichungstag der Anmeldung: 06.03.2019
(73) Patentinhaber: Magna Auteca GmbH, 8160 Krottendorf bei Weiz (AT)
(72) Erfinder: PALVOELGYI, Martin, 8311 Markt Hartmannsdorf (AT)
(74) Vertreter: Rausch, Gabriele

(56) Entgegenhaltungen:
- DE-A1-102011 105 867
- DE-A1-102013 007 562
- US-A- 3 872 334
- US-A- 5 221 503

## Beschreibung

Die Erfindung betrifft einen Rotor für die Anwendung in einem bürstenlosem Gleichstrom (BLDC) Motor.

### Stand der Technik

Üblicherweise ist bei bürstenlosen Gleichstrommotoren der Rotor mit einem Permanentmagneten realisiert und der feststehende Stator umfasst die Spulen, die von einer elektronischen Schaltung zeitlich versetzt angesteuert werden, um ein Drehfeld entstehen zu lassen, welches ein Drehmoment am permanent erregten Rotor verursacht.
Es sind die unterschiedlichsten Ausführungen für einen Rotor und die darin enthaltenen Magnete bekannt, beispielsweise aus der US 2002/ 067 091 A1. In den Figuren 1 und 2 wird der Stand der Technik kurz erläutert.

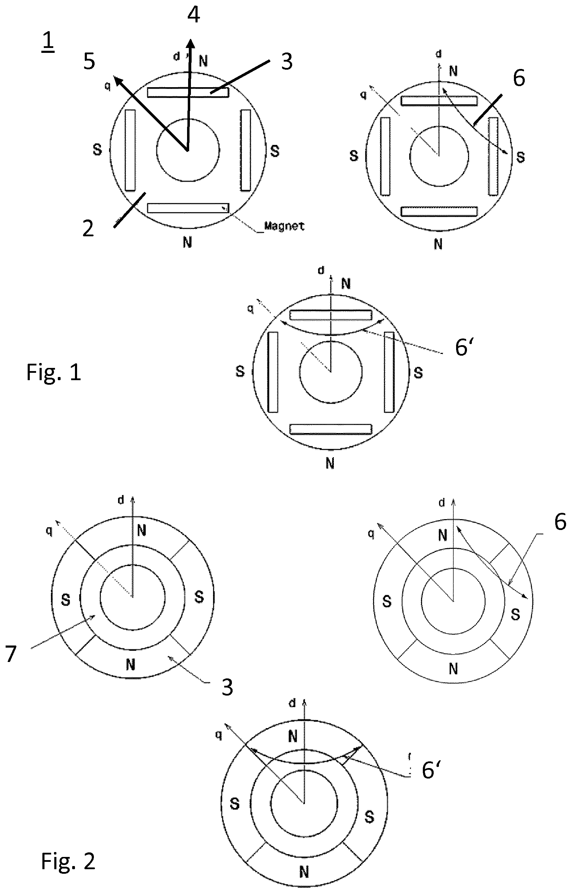

Figur 1a zeigt einen geblechten Rotor mit in Schlitzen eingesetzten Magneten. Der Rotor 1 besteht aus einem Blechpaket 2, in dem Aussparungen für das Einbringen von Permanentmagneten vorhanden sind. Im gezeigten Beispiel sind vier Magnete 3 verbaut und bilden vier Quadranten im Rotor aus. Eingezeichnet ist dabei das rotorfeste Koordinatensystem d/q.

Der magnetische Pfad 6 von Pol zu Pol, in sogenannter d-Richtung 4, verläuft durch das Eisenmaterial des Blechpakets 2, aber auch durch die Magnete 3, die eine Permeabilität ähnlich von Luft besitzen.

Der magnetische Pfad 6' zwischen den Polübergängen, in sogenannter q-Richtung 5, verläuft jedoch nur durch Eisenmaterial mit sehr großer Permeabilität. Es existiert somit ein großer d/q Unterschied für den magnetischen Fluss.

Figur 2 zeigt einen Rotor 1 mit Nabe 7 und einem durchgehendem Magnet 3 mit alternierenden Nord- und Südpolen, wie er zum Beispiel mittels Spritzguss herstellbar ist. Diese Bauweise hat den Vorteil mehrere Funktionen in die Nabe zu integrieren wie zum Beispiel eine Verzahnung oder Lagerflächen. Kunststoffgebundene Magnete sind auch weniger bruchgefährdet im Vergleich zu gesinterten Magneten. Der magnetische Pfad zwischen Polen bzw. zwischen Polübergängen ist in dieser Ausführungsform gleich und es existiert hier kein d/q Unterschied.

Ein d/q Unterschied eines Rotors kann in einem Motor genutzt werden um die Rotorlage zu erkennen, da die Induktivität in den Statorwicklungen je nach Rotorlage unterschiedlich ist. Diese Information wird für die elektrische Kommutierung des Motors genutzt. Bei derartigen sensorlosen Kommutierungverfahren erfolgt die Erfassung der Rotorposition beispielsweise über Anlegen einer hochfrequenten Messspannung an den Statorspulen (Hochfrequenzinjektion), die je nach Rotorlage einen entsprechenden Stromfluss zur Folge hat. Der Stromfluss wird von der elektronischen Steuerschaltung ausgewertet. Diese Methode scheitert jedoch bei Rotoren mit durchgehendem Magnetring, da hier kein d/q Unterschied vorhanden ist. Im Gegensatz zu Kommutierungsverfahren die auf Auswertung der Gegenspannung basieren, funktionieren Verfahren die einen d/q Unterschied ausnutzen auch bei niedrigen Drehzahlen bzw. Stillstand des Rotors.

Aus der DE 10 2013 007 562 A1 ist ein Rotor für einen permanenterregte elektrische Maschine bekannt, wobei Rotormagneten aus kunststoffgebundenen Magnetmaterial bestehend an einem Rotorkörper befestigt sind.

Aus der US 5 221 503 B1 ist ein Verfahren zur Herstellung einer elektromagnetischen Vorrichtung mit Bereichen aus ferromagnetischem Material und Permanentmagnetmaterial offenbart. Die elektromagnetischen Baugruppen dieser Erfindung verwenden thermoplastisch eingekapselte Eisenpulver und epoxyharzgekapseltes Permanentmagnetpulver. Die Permanentmagnet-Rotoranordnung weist einen ferromagnetischen Kern auf, der durch einen Bereich aus vergossenem Eisenpulver und eine Permanentmagnethülle definiert ist, die durch einen Bereich aus vergossenem Permanentmagnetmaterial definiert ist.

Aus der US 3 872 334 B1 ist eine Rotoranordnung für eine elektrische Maschine bekannt, hergestellt aus einer Mischung aus thermoplastischem Pulver und Bariumferritpartikeln in einem solchen Verhältnis, dass die fertige Anordnung vorbestimmte physikalische und magnetische Kräfte aufweist. Die magnetischen Partikel sind so ausgerichtet, dass sie die Magnetkraft maximieren, und es gibt genügend Kunststoffmaterial, um die erforderliche Strukturfestigkeit im Getriebe zu gewährleisten.

Es ist Aufgabe der Erfindung ein Verfahren zur Herstellung eines Rotors und einen Rotor zu schaffen, der einfach aufgebaut und für eine auf d/q Unterschied basierender Kommutierung geeignet ist.

Die Aufgabe wird gelöst von einem Verfahren zur Herstellung eines Rotors für einen bürstenlosen Gleichstrommotor mit einem durchgängigen Magnetring gemäß des unabhängigen Anspruchs 1, wobei der Magnetring innerhalb der Statorpole des Gleichstrommotors einen im Querschnitt kreisfömigen Zylinder bildet, gleichzeitig der Magnetring an seiner innenliegenden Seite eine im Querschnitt sternförmige Innenkontur aufweist und an dieser sternförmigen Innenkontur eine Nabe mit einem Material anliegt, welches eine deutlich höhere magnetischen Permeabilität als das Material des Magnetrings aufweist, wobei in einem Schritt eine Nabe aus einem Kunststoffmaterial gespritzt wird, und wobei die Nabe mit einem Weicheisenring umgeben wird, und ein Magnetring aufgespritzt wird, wobei der Magnetring sich zwischen einer im Querschnitt kreisförmigen Kontur und einer sternförmigen Kontur erstreckt Diese Konstruktion ist für einen Innenläufer geeignet.

Dabei ist es von Vorteil, dass das an der sternförmigen Kontur anliegende Material der Nabe eine Mischung aus Kunststoff und Eisen ist.

Alternativ ist es von Vorteil, dass das an der sternförmigen Kontur anliegende Material aus Eisen ist.

### Beschreibung der Erfindung

Die Erfindung wird nachfolgend beispielhaft unter Bezugnahme auf die beigefügte Zeichnung beschrieben.
Figuren 1 und 2 zeigen eine schematische Darstellung des Standes der Technik,
Figur 3 zeigt eine beispielhafte Ausführungsform im Schnitt,
Figur 4 zeigt einen Schnitt durch eine erfindungsgemäße Ausführungsform.

Die Erfindung bezieht sich auf einen Rotor für einen BLDC Motor mit durchgehendem Magnetring der jedoch einen d/q Unterschied aufweist.

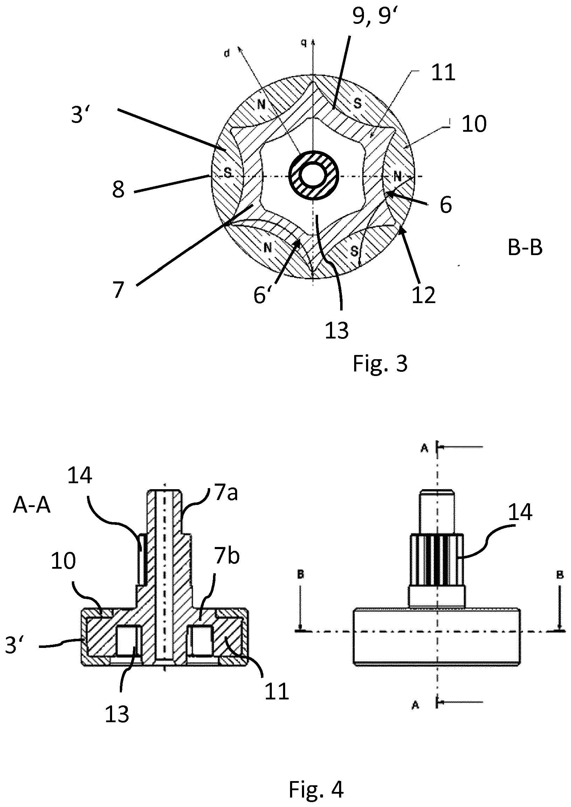

Figur 3 zeigt ringfömig angeordnete Magnete 3 in einem Magnetring 3', der an seiner Außenkontur 8 zylindrisch ist, wobei die Innenseite eine Innenkontur 9 ist, die sternförmig ausgebildet ist. Der Magnetring 3' weist trotz der sternfömig ausgebildeten Innenkontur 9 Dünnstellen 12 im Bereich der Sternspitzen auf, sodass der Magnetring geschlossen ist.

Die Dünnstellen 12 des Magnetringes 3' befinden sich an den Polübergängen. Das magnetische Material 10 besitze eine Permeabilität von circa µ ∼1.

An der Innenkontur 9 anliegend schließt sich ein Bereich der Nabe 7 an, der aus Material 11, welches eine gute magnetische Leitfähigkeit in der Größenordnung von µ >>1 aufweist, herstellt ist.

In d-Richtung verläuft der magnetische Pfad 6 durch mehr Magnetmaterial 10 als durch magnetisch gut leitendes Material 11 und der magnetische Pfad 6' in q-Richtung durch mehr gut leitendem Material 11 als durch Magnetmaterial 10. Es ergibt sich dadurch ein ausgeprägter d/q Unterschied.

Die Herstellung des Rotors erfolgt im Spritzguss. In Figur 4 a ist ein Schnitt durch den Rotor entlang der Achse A-A dargestellt. Man erkennt die Nabe 7, die sich von einem Wellenstummel 7a abgestuft in einen zylindrischen Bereich 7b erstreckt. Der zylindrische Bereich weist die in Fig. 3 dargestellte Aussenkontur 9' auf, die der Innenkontur 9 des Magnetrings 3' entspricht. Innerhalb der Nabe 7 ist ein ringförmiger Hohlraum 13 ausgebildet, der innen von der zylindrischen Nabe begrenzt ist und außen an der sternförmigen Innenstruktur der Nabe anschließt.

Im Stand der Technik wird die Nabe 7 im Spritzgussverfahren hergestellt, wobei ein Material 11 mit weichmagnetischen Eigenschaften verwendet wird, z.B. eine Mischung aus Kunststoff und Eisenpulver. Die Nabe 7 wird in einem nächsten Schritt mit Magnetmaterial 10 umspritzt, um den Magnetring 3' auszubilden. Im Bereich des Wellenstummels 7a der Nabe 7 kann noch eine Verzahnung 14 angespritzt sein

Erfindungsgemäß wird zunächst eine Nabe 7 aus einem Kuststoffmaterial gespritzt, auf die ein Weicheisenring aufgeschoben wird, dessen Außenkontur 9' sternförmig ausgebildet ist. Danach werden Nabe mit Weicheisenring mit Magnetmaterial 11 umspritzt.

### Bezugszeichenliste

1 Rotor
2 Blechpaket
3 Magnet
3' Magnetring
4 d-Richtung
5 q-Richtung
6 magnetischer Pfad d-Richtung
6' magnetischer Pfad q-Richtung
7 Nabe
7a Wellenstummel
7b Zylindrischer Bereich
8 Außenkontur
9 Innenkontur
9' Außenkontur
10 magnetisches Material
11 magnetisch leitendes Material
12 Dünnstellen
13 Hohlraum
14 Verzahnung

## Patentansprüche

1. Verfahren zur Herstellung eines Rotors (1) für einen bürstenlosen Gleichstrommotor mit einem durchgängigen Magnetring (3'), wobei der Magnetring (3') innerhalb der Statorpole des Gleichstrommotors einen in Querschnitt kreisfömigen Zylinder bildet, wobei der Magnetring (3') an seiner innenliegenden Seite eine im Querschnitt sternförmige Innenkontur (9) aufweist und an dieser sternförmigen Innenkontur (9) eine Nabe (7) mit einem Material (11) anliegt, welches eine deutlich höhere magnetischen Permeabilität als das Material (10) des Magnetrings (3') aufweist, wobei in einem Schritt eine Nabe (7) aus einem Kunststoffmaterial gespritzt wird,
**dadurch gekennzeichnet, dass**
die Nabe (7) mit einem Weicheisenring umgeben wird, dessen Außenkontur (9') sternförmig ist, und ein Magnetring (3') aufgespritzt wird, wobei der Magnetring (3') sich zwischen der im Querschnitt kreisförmigen Außenkontur (8) des Rotors und der im Querschnitt sternförmigen Außenkontur (9') des Weicheisenrings erstreckt.

2. Rotor (1) hergestellt nach dem Verfahren aus Anspruch 1, **dadurch gekennzeichnet, dass** das an der sternförmigen Außenkontur (9') anliegende Material (11) der Nabe (7) eine Mischung aus Kunststoff und Eisen ist.

3. Rotor (1) hergestellt nach dem Verfahren aus Anspruch 1, **dadurch gekennzeichnet, dass** das an der sternförmigen Außenkontur (9') anliegende Material (11) aus Eisen ist.

## Claims

1. Method for producing a rotor (1) for a brushless DC motor having a continuous magnetic ring (3'), wherein the magnetic ring (3') within the stator poles of the DC motor forms a cylinder which is circular in the cross section, wherein the magnetic ring (3') on the internal side thereof has an internal contour (9) which is star-shaped in the cross section, and a hub (7) having a material (11) which has a significantly higher magnetic permeability than the material (10) of the magnetic ring (3') bears on said star-shaped internal contour (9), wherein a hub (7) is injection-moulded from a plastics material in one step,
**characterized in that**
the hub (7) is surrounded by a soft iron ring of which the external contour (9') is star-shaped, and a magnetic ring (3') is over-moulded thereon, wherein the magnetic ring (3') extends between the external contour (8) of the rotor that is circular in the cross section and the external contour (9') of the soft iron ring that is star-shaped in the cross section.

2. Rotor (1) produced according to the method from Claim 1, **characterized in that** the material (11) of the hub (7) that bears on the star-shaped external contour (9') is a mixture of plastics material and iron.

3. Rotor (1) produced according to the method from Claim 1, **characterized in that** the material (11) that bears on the star-shaped external contour (9') is of iron.

## Revendications

1. Procédé de fabrication d'un rotor (1) pour un moteur à courant continu sans brosse comprenant un anneau magnétique continu (3'), l'anneau magnétique (3') formant à l'intérieur des pôles statoriques du moteur à courant continu un cylindre de section transversale circulaire, l'anneau magnétique (3') présentant, au niveau de son côté intérieur, un contour intérieur (9) de section transversale en forme d'étoile et un moyeu (7) s'appliquant contre ce contour intérieur (9) en forme d'étoile avec un matériau (11) qui présente une perméabilité magnétique nettement supérieure à celle du matériau (10) de l'anneau magnétique (3'), un moyeu (7) en matière plastique étant pulvérisé dans une étape,
**caractérisé en ce que**
le moyeu (7) est entouré d'un anneau en fer doux dont le contour extérieur (9') est en forme d'étoile, et un anneau magnétique (3') est appliqué par pulvérisation, l'anneau magnétique (3') s'étendant entre le contour extérieur (8) du rotor de section transversale circulaire et le contour extérieur (9') de l'anneau en fer doux de section transversale en forme d'étoile.

2. Rotor (1) fabriqué selon le procédé de la revendication 1, **caractérisé en ce que** le matériau (11), s'appliquant sur le contour extérieur (9') en forme d'étoile, du moyeu (7) est un mélange de plastique et de fer.

3. Rotor (1) fabriqué selon le procédé de la revendication 1, **caractérisé en ce que** le matériau (11) s'appliquant sur le contour extérieur (9') en forme d'étoile est constitué de fer.
